## Europäisches Patentamt
## European Patent Office
## Office européen des brevets

(19)

(11) Numéro de publication: **0 047 699**
**B1**

---

(12) FASCICULE DE BREVET EUROPEEN

---

(45) Date de publication du fascicule du brevet:
06.06.84

(51) Int. Cl.³: **B 60 N 1/10**, B 60 N 1/04

(21) Numéro de dépôt: 81401376.9

(22) Date de dépôt: 02.09.81

---

(54) Siège basculant à dossier rabattable, pour véhicule.

---

(30) Priorité: 08.09.80 FR 8019335

(43) Date de publication de la demande:
17.03.82 Bulletin 82/11

(45) Mention de la delivrance du brevet:
06.06.84 Bulletin 84/23

(84) Etats contractants désignés:
DE GB IT

(56) Documents cités:
EP - A - 0 006 610
FR - A - 2 411 104
FR - A - 2 411 105
FR - A - 2 449 552
US - A - 2 859 798
US - A - 3 880 464

(73) Titulaire: **AUTOMOBILES PEUGEOT, 75, avenue de la Grande Armée, F-75116 Paris (FR)**
Titulaire: **AUTOMOBILES CITROEN, 117-167 Quai André Citroen, F-75747 Paris Cedex 15 (FR)**

(72) Inventeur: **Felten, Raymond, 6 Rue d'Echenans, F-70400 Hericourt (FR)**

(74) Mandataire: **Moncheny, Michel et al, c/o Cabinet Lavoix 2 Place d'Estienne d'Orves, F-75441 Paris Cedex 09 (FR)**

---

BUNDESDRUCKEREI BERLIN

## Description

L'invention concerne les sièges basculants, à dossier rabattable, pour véhicules.

Le brevet FR-A-2 411 104 décrit un tel siège basculant, comprenant une assise articulée à sa partie avant sur un support autour d'un premier axe transversal de façon à pouvoir basculer par rapport à ce support, un dossier articulé sur la partie arrière de cette assise autour d'un deuxième axe également transversal, de façon à pouvoir être rabattu sur l'assise, un organe d'accrochage de l'assise sur la structure du véhicule, en position d'utilisation du siège, un organe d'accrochage du dossier sur l'assise, des moyens de verrouillage d'au moins un organe d'accrochage, et des moyens de commande à levier de manœuvre unique.

Dans cet agencement, le levier de manœuvre unique est constitué par l'organe d'accrochage du dossier sur l'assise et l'organe d'accrochage de l'assise sur le plancher est verrouillé par une came solidaire du dossier. L'organe d'accrochage du dossier n'est donc pas verrouillé ce qui constitue un grave inconvénient du point de vue de la sécurité. De plus, le fait d'utiliser une came solidaire du dossier pour verrouiller l'assise nécessite une grande précision dans la réalisation, ce qui constitue un facteur d'augmentation du coût. On notera également que la manœuvre d'un organe d'accrochage nécessite un effort important.

L'invention vise à perfectionner un tel agencement de siège à dossier rabattable pour améliorer la sécurité, simplifier la fabrication des mécanismes de verrouillage et en faciliter la commande.

Par rapport au brevet précité, l'invention est essentiellement caractérisée en ce que les moyens de commande comprennent une pièce de commande qui est actionnée par le levier de manœuvre unique et qui comporte deux surfaces de came coopérant respectivement avec des organes de verrouillage des organes d'accrochage, ces surfaces de came étant agencées pour normalement bloquer les organes de verrouillage et pour libérer successivement, lors de l'actionnement de la pièce de commande, l'organe de verrouillage du dossier, puis l'organe de verrouillage de l'assise.

Un exemple de siège basculant conforme à l'invention est décrit ci-après, avec référence aux dessins annexés sur lesquels

la fig. 1 représente schématiquement un siège vu de côté en position d'utilisation, ce même siège étant représenté en traits mixtes, en position repliée vers l'avant;

la fig. 2 est une vue de face du siège de la fig. 1 en position normale d'utilisation;

la fig. 3 est une vue de côté du mécanisme d'accrochage et de verrouillage du siège;

et la fig. 4 est une vue de face partielle du siège, au droit du mécanisme, certaines parties étant omises, dans un but de clarté.

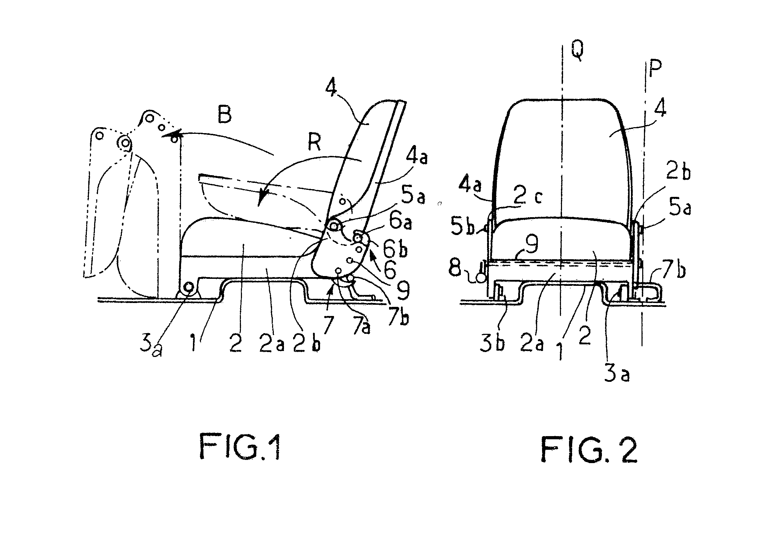

Les fig. 1 et 2 montrent, placé sur un plancher 1 de véhicule, un siège comportant une assise 2 dont l'armature $2^a$ est reliée, à sa partie avant inférieure, à la structure du véhicule par des articulations coaxiales $3^a$, $3^b$ et un dossier 4 dont l'armature $4^a$ est reliée, à sa partie inférieure, à des proéminences arrière $2^b$, $2^c$ de l'armature $2^a$ par des articulations coaxiales $5^a$, $5^b$; ces quatre articulations ont des axes transversaux c'est à dire perpendiculaires au plan P de symétrie du véhicule et à celui Q du siège, de manière que le dossier puisse être rabattu (flèche R) sur l'assise, puis basculé avec celle-ci vers l'avant (flèche B).

Des moyens d'accrochage 6 et 7 immobilisent respectivement le dossier 4 par rapport à l'assise, et celle-ci par rapport au plancher: ils comportent à cet effet deux crochets $6^a$, $7^a$ articulés sur l'extrémité arrière de l'armature $2^a$ et coopérant respectivement avec un tenon $6^b$ solidaire de l'armature $4^a$ du dossier, et avec un anneau $7^b$ fixé sur le plancher 1. De préférence, cet anneau traverse le plan P de manière à servir également pour l'accrochage de l'assise d'un deuxième siège situé à droite du plan P en considérant la fig. 2.

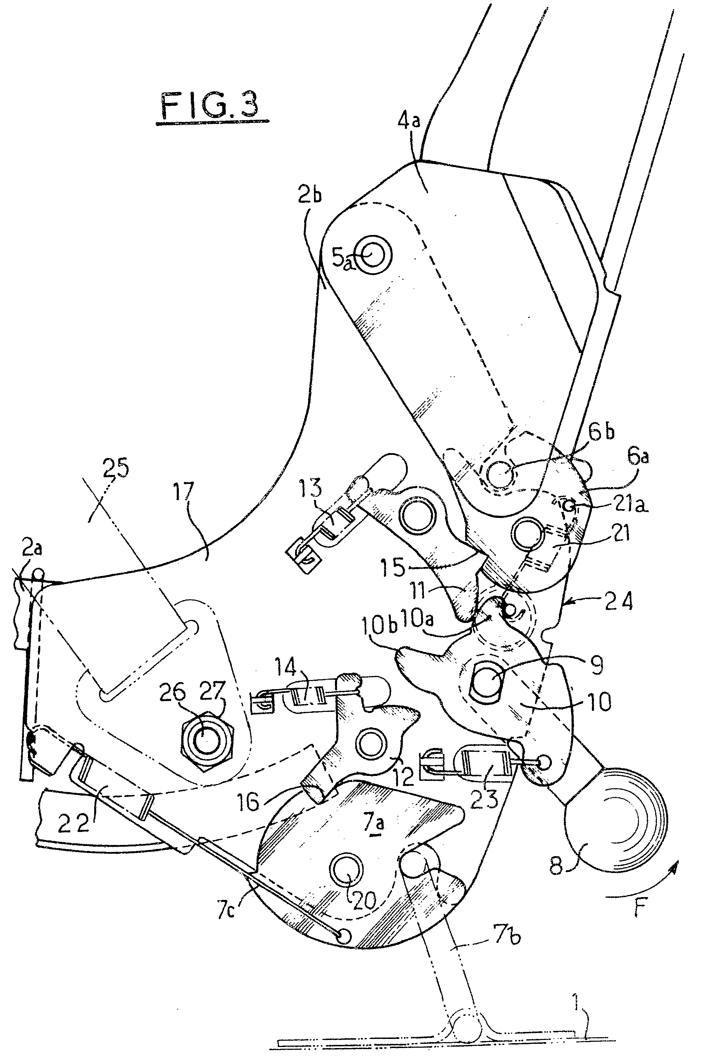

L'armature $2^a$ de l'assise porte, sur sa face latérale éloignée du plan P un levier de manœuvre 8 dont l'axe d'articulation est matérialisé par une tige 9 traversant le siège perpendiculairement à son plan de symétrie Q et solidaire en rotation d'une pièce de commande 10 agissant sur des moyens de verrouillage des deux crochets $6^a$, $7^a$ comme visible sur la fig. 3.

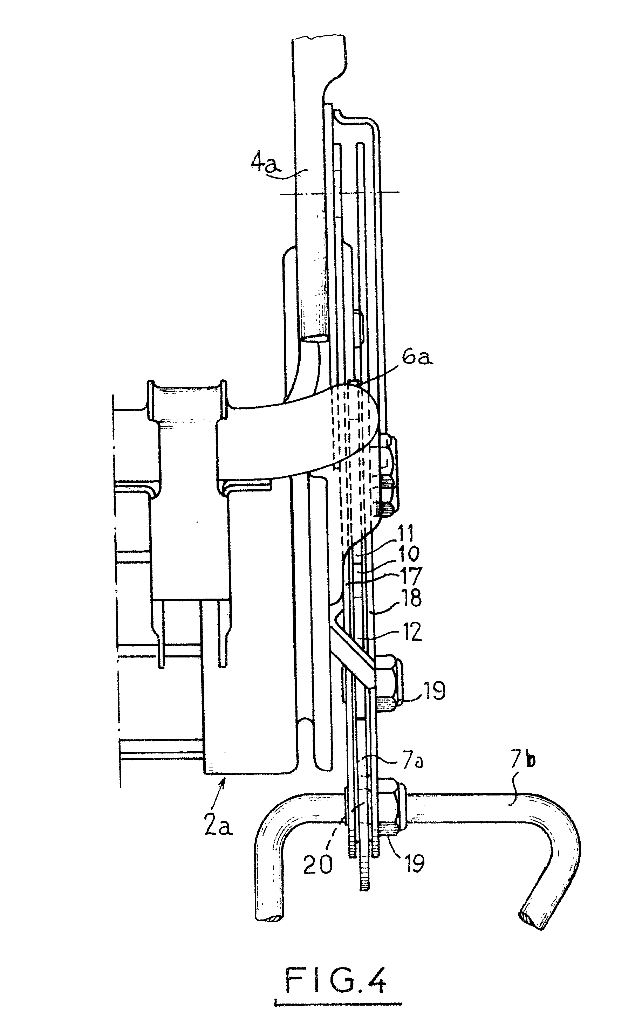

Cette pièce de commande 10 est formée d'une plaque parallèle aux plans P et Q et son contour comprend deux protubérances ou cames $10^a$, $10^b$ propres à coopérer respectivement avec des doigts de verrouillage 11 et 12 que des ressorts 13 et 14 tendent à engager dans des encoches 15, 16 pratiquées dans les crochets $6^a$, $7^a$. Ces doigts et ces crochets sont, comme la pièce 10, formés de plaques disposées dans un même plan parallèle au plan P et articulées autour d'axes transversaux entre deux flasques 17, 18 solidaires de l'armature $2^a$ (fig. 4). Le flasque 17 est soudé ou brasé sur l'armature $2^a$, et le flasque 18, formant couvercle pour le mécanisme de verrouillage, est fixé sur l'autre flasque par des écrous 19 et des vis 20 pouvant servir d'axe d'articulation de crochet ou de doigt de verrouillage. Ce flasque 18 a été supprimé sur la fig. 3.

Des ressorts 21 et 22 tendent à faire tourner les crochets $6^a$, $7^a$ dans le sens correspondant au dégagement de la pièce coopérante, tenon $6^b$ ou anneau $7^b$, et un ressort 23 tire sur la pièce de commande 10 dans le sens où les cames $10^a$ et $10^b$ s'écartent des doigts correspondants 11 et 12.

Le fonctionnement du mécanisme est le suivant: le siège étant dans sa position d'utilisation comme représenté à la fig. 3, les crochets $6^a$, $7^a$ sont verrouillés en position d'engagement sur le tenon $6^b$ et l'anneau $7^b$ par les doigts 11 et 12 engagés dans les encoches 15 et 16 par les ressorts 13 et 14. L'armature 4ᵃ du dossier est ainsi immobilisée par le tenon 6ᵇ qui en est solidaire, et l'assise est maintenue accrochée au plancher par l'anneau 7ᵇ.

Pour rabattre le dossier sur l'assise, par pivotement suivant la flèche R autour des articulations 5ᵃ, 5ᵇ il faut dégager le tenon 6ᵇ du crochet 6ᵃ. A cet effet, le levier 8, est manœuvré dans le sens de la flèche F, suffisamment pour que la came 10ᵃ de la pièce de commande 10 repousse le doigt 11, à l'encontre du ressort 13, jusqu'à son dégagement de l'encoche 15 du crochet 6ᵃ. Ce dernier peut alors tourner sous l'action du ressort 21, jusqu'à mise en butée d'une pièce 21ᵃ solidaire du crochet 6ᵃ-telle qu'un pion d'attache du ressort 21 — contre une partie de l'armature 2ᵃ — telle que sa bordure 24. Le crochet 6 se trouve alors maintenu, par tension du ressort 21, dans une position pour laquelle le tenon 6ᵇ peut se déplacer librement.

Pour basculer l'assise vers l'avant, par pivotement autour des articulations 3ᵃ, 3ᵇ il faut dégager l'anneau 7ᵇ du crochet 7ᵃ. Pour cela le levier 8 est manœuvré dans le sens de la flèche F avec une amplitude plus importante que pour le déverrouillage du dossier, de manière que la came 10ᵇ de la pièce de commande 10 atteigne puis repousse, à l'encontre du ressort 14, le doigt 12 jusqu'à ce qu'il sorte de l'encoche 16 du crochet 7ᵃ. Ce dernier peut alors tourner sous l'action du ressort 22 jusqu'à mise en butée d'un cran 7ᶜ de son contour contre le doigt 12; le crochet 7ᵃ se trouve alors maintenu dans une position dans laquelle il peut être dégagé de l'anneau 7ᵇ.

La séquence inverse de fonctionnement, à partir de la position rabattue et basculée du siège, est la suivante: le levier de manœuvre 8 étant maintenu par le ressort 23 dans sa position de la fig. 3 pour laquelle les cames 10ᵃ et 10ᵇ sont écartées des leviers correspondants 11 et 12, on bascule l'assise vers l'arrière et l'on exerce sur l'arrière de cette assise une poussée suffisante vers le bas pour que l'anneau 7ᵇ fasse tourner le crochet 7ᵃ, à l'encontre du ressort 22, jusqu'à engagement dans l'encoche 16 du doigt 12 tiré par le ressort 14: dès lors le crochet 7ᵃ est verrouillé.

On relève ensuite le dossier 4 jusqu'à engagement du tenon 6ᵇ dans le crochet 6ᵃ et l'on exerce sur le haut du dossier 4 une poussée suffisante pour que, par pivotement autour des articulations 5ᵃ, 5ᵇ, le tenon 6ᵇ fasse tourner le crochet 6ᵃ à l'encontre du ressort 21 jusqu'à engagement dans l'encoche 15 du doigt 11 tiré par le ressort 13: dès lors le crochet 6ᵃ est verrouillé.

Un tel mécanisme d'accrochage et de verrouillage est avantageux non seulement par sa simplicité de manœuvre — un seul levier 8 par siège — et de réalisation, mais aussi par son faible encombrement transversal qui permet son adaptation à deux sièges séparés juxtaposés très proches l'un de l'autre, dont les mécanismes propres de verrouillage sont situés à proximité du plan P de symétrie, avec accrochage sur le plancher par un seul anneau 7ᵇ; la face latérale de chaque siège opposée au plan P et servant d'accès à l'utilisateur ne comporte que le levier de manœuvre et n'est encombrée d'aucun mécanisme.

Il est à noter également que l'armature de l'assise, complétée par les flasques 17, 18 et le mécanisme d'accrochage et de verrouillage décrits précédemment peut supporter des efforts importants, et permet en conséquence d'accrocher une ceinture de sécurité sur une telle assise, plutôt que sur le plancher du véhicule. De tels moyens d'ancrage d'une ceinture 25 sont constitués par un boulon court 26 et un écrou 27 représentés sur la fig. 3. Cet agencement s'avère particulièrement résistant vis à vis des efforts dus à une forte décélération du véhicule, car:

— les flasques 17, 18 et le crochet 7ᵃ sont très proches du plan, parallèle à la direction d'avancement du véhicule, dans lequel la ceinture exerce une traction sur l'armature du siège et par suite sur l'anneau fixé au plancher;
— le verrouillage des crochets dans leur position d'immobilisation de l'assise et du dossier est assuré de manière positive par encliquetage des doigts 11, 12 dans les encoches 15, 16.

**Revendications**

1. Siège de véhicule, comprenant une assise (2) articulée à sa partie avant sur un support (1) autour d'un premier axe transversal (3ᵃ, 3ᵇ) de façon à pouvoir basculer par rapport à ce support, un dossier (4) articulé sur la partie arrière de cette assise autour d'un deuxième axe (5ᵃ, 5ᵇ) également transversal, de façon à pouvoir être rabattu sur l'assise, un organe (7ᵃ) d'accrochage de l'assise sur la structure du véhicule, en position d'utilisation du siège, un organe d'accrochage (6ᵃ) du dossier sur l'assise, des moyens de verrouillage d'au moins un organe d'accrochage, et des moyens de commande (10) à levier de manœuvre (8) unique, caractérisé en ce que les moyens de commande comprennent une pièce de commande (10) qui est actionnée par le levier de manoeuvre unique (8) et qui comporte deux surfaces de came (10ᵃ, 10ᵇ) coopérant respectivement avec des organes de verrouillage (11, 12) des organes d'accrochage (6ᵃ, 7ᵃ), ces surfaces de came (10ᵃ, 10ᵇ) étant agencées pour normalement bloquer les organes de verrouillage (11, 12) et pour libérer successivement, lors de l'actionnement de la pièce de commande (10), l'organe (11) de verrouillage du dossier, puis l'organe (12) de verrouillage de l'assise.

2. Siège suivant la revendication 1, caractérisé en ce que les organes d'accrochage (6ᵃ, 7ᵃ), les organes de verrouillage (11, 12) et la pièce de commande (10) sont des plaques situées dans un même plan parallèle au plan de symétrie (Q) du siège et articulées autour d'axes perpendiculaires à ce plan.

3. Siège suivant la revendication 2, caractérisé en ce que les organes d'accrochage (6ª, 7ª) les organes de verrouillage (11, 12) et la pièce de commande (10) sont disposés entre deux flasques (17, 18) fixés sur l'armature de l'assise.

4. Siège suivant la revendication 3, caractérisé en ce que l'un (18) des deux flasques, situé vers l'extérieur du siège, est démontable.

5. Siège suivant l'une quelconque des revendications 1 à 4, caractérisé en ce que les organes d'accrochage (6ª, 7ª) sont sollicités par des organes élastiques (21, 22) vers une position dans laquelle ils sont dégagés d'organes complémentaires (6ᵇ, 7ᵇ) avec lesquels ils viennent en prise et qui sont respectivement solidaires du dossier et du plancher.

6. Siège suivant l'une quelconque des revendications 1 à 5, caractérisé en ce que les organes de verrouillage (11, 12) sont sollicités par des organes élastiques (13, 14) vers une position dans laquelle ils verrouillent les organes d'accrochage (6ª, 7ª).

7. Siège suivant l'une quelconque des revendications 1 à 6, caractérisé en ce que la pièce de commande (10) est sollicitée par un organe élastique (23) vers une position dans laquelle les surfaces de came (10ª, 10ᵇ) sont éloignées des organes de verrouillage (11, 12).

8. Siège suivant la revendication 5, caractérisé en ce que des butées (21ª, 24, 7ᶜ, 12) sont prévues pour limiter le déplacement des organes d'accrochage sous l'action de leurs organes élastiques de rappel (21, 22).

**Patentansprüche**

1. Fahrzeugsitz mit einem mit seinem vorderen Teil um eine erste Querachse (3a, 3b) an einem Träger (1) schwenkbar gelagerten Sitzteil (2) und einer am hinteren Teil des Sitzteiles (2) um eine zweite Querachse (5a, 5b) auf den Sitzteil (2) klappbaren Lehne (4), mit einem Organ (7a) zum Arretieren des Sitzteiles (2) am Fahrzeug in der Gebrauchslage des Fahrzeugsitzes, mit einem Organ (6a) zum Arretieren der Lehne (4) am Sitzteil (2), mit Mitteln zum Verriegeln mindestens eines Arretierungsorganes und mit durch einen einzigen Betätigungshebel (8) betätigbaren Steuermittels (10), dadurch gekennzeichnet, daß die Steuermittel ein Steuerglied (10) aufweisen, das durch den Betätigungshebel (8) betätigbar ist und zwei Nockenflächen (10a, 10b) aufweist, die mit Verriegelungselementen (11, 12) für die Arretierungsorgane (6a, 7a) zusammenwirken und die die Verriegelungselemente (11, 12) normalerweise blockieren, während sie bei Betätigung des Steuergliedes (10) nacheinander das Verriegelungselement (11) für die Lehne (4) und das Verriegelungselement (12) für den Sitzteil (2) freigeben.

2. Fahrzeugsitz nach Anspruch 1, dadurch gekennzeichnet, daß die Arretierungsorgane (6a, 7a) die Verriegelungselemente (11, 12) und das Steuerglied (10) von Platten gebildet werden, die in einer Ebene angeordnet sind, die parallel zur Symmetrieebene (Q) des Fahrzeugsitzes verläuft und daß sie um senkrecht zu dieser Ebene stehende Achsen schwenkbar sind.

3. Fahrzeugsitz nach Anspruch 2, dadurch gekennzeichnet, daß die Arretierungsorgane (6a, 7a), die Verriegelungselemente (11, 12) und das Steuerglied (10) zwischen zwei am Träger des Sitzteiles (2) befestigten Flanschen (17, 18) angeordnet sind.

4. Fahrzeugsitz nach Anspruch 3, dadurch gekennzeichnet, daß der vom Fahrzeugsitz betrachtet äußere Flansch (18) demontierbar ist.

5. Fahrzeugsitz nach einem der Ansprüche 1 bis 4, dadurch gekennzeichnet, daß die Arretierungsorgane (6a, 7a) durch elastische Organe (21, 22) in eine Position gedrängt werden, in der sie zusätzliche Organe (6b, 7b) freigeben, mit denen sie in Eingriff treten können und die an der Lehne (2) und am Boden (1) angeordnet sind.

6. Fahrzeugsitz nach einem der Ansprüche 1 bis 5, dadurch gekennzeichnet, daß die Verriegelungsorgane (11, 12) durch elastische Organe (13, 14) in eine Position gedrängt werden, in der sie die Arretierungsorgane (6a, 7a) verriegeln.

7. Fahrzeugsitz nach einem der Ansprüche 1 bis 6, dadurch gekennzeichnet, daß das Steuerglied (10) durch ein elastisches Organ (23) in eine Position gedrängt wird, in der die Nockenflächen (10a, 10b) von den Verriegelungsorganen (11, 12) entfernt sind.

8. Fahrzeugsitz nach Anspruch 5, dadurch gekennzeichnet, daß er mit Anschlägen (21a, 24, 7c, 12) versehen ist, die zur Begrenzung der Bewegung der Arretierungsorgane (6a, 7a) unter dem Einfluß der auf sie einwirkenden elastischen Organe (21, 22) dienen.

**Claims**

1. A vehicle seat structure comprising a seat (2) pivotally mounted in its front part on a support (1) to pivot about a first transverse axis (3a, 3b) so as to be tiltable relative to this support, a backrest (4) mounted on the rear part of this seat to pivot about a second axis (5a, 5b) which is also a transverse axis so as to be capable of being swung over onto the seat, a hooking element (7a) for hooking the seat on the structure of the vehicle in a position of utilization of the seat structure, a hooking element (6a) for hooking the backrest to the seat, locking means for locking at least one hooking element, and control means (10) having a single actuating lever (8), characterized in that the control means comprise a control member (10) which is actuated by the single actuating lever (8) and which has two cam surfaces (10a, 10b) which respectively cooperate with locking elements (11, 12) for locking the hooking elements (6a, 7a), these cam surfaces (10a, 10b) being arranged to lock normally the locking elements (11, 12) and release in succession, upon the actuation of the control member (10), the locking element (11) of the backrest and then the locking element (12) of the seat.

2. A seat structure according to claim 12, characterized in that the hooking elements (6a, 7a), the locking elements (11, 12) and the control member (10) are plates contained in a common plane parallel to the plane of symmetry (Q) of the seat structure and are pivotally mounted to pivot about axes perpendicular to this plane.

3. A seat structure according to claim 2, characterized in that the hooking elements (6a, 7a), the locking elements (11, 12) and the control member (10) are disposed between two side walls (17, 18) fixed to the frame of the seat.

4. A seat structure according to claim 3, characterized in that one (18) of the two side walls, located adjacent to the outside of the seat, is capable of being disassembled.

5. A seat structure according to any one of the claims 1 to 4, characterized in that the hooking elements (6a, 7a) are biased by resiliently yieldable means (21, 22) to a position in which they are disengaged from complementary elements (6b, 7b) with which they engage and which are respectively connected to the backrest and to the floor.

6. A seat structure according to any one of the claims 1 to 5, characterized in that the locking elements (11, 12) are biased by resiliently yieldable means (13, 14) to a position in which they lock the hooking elements (6a, 7a).

7. A seat structure according to any one of the claims 1 to 6, characterized in that the control member (10) is biased by resiliently yieldable means (23) to a position in which the cam surfaces (10a, 10b) are shifted way from the locking elements (11, 12).

8. A seat structure according to claim 5, characterized in that abutments (21a, 24, 7c, 12) are provided for limiting the displacement of the hooking elements under the action of their resiliently yieldable return means (21, 22).

FIG.1

FIG. 2

FIG.3

0 047 699

9

FIG.4